# EUROPEAN PATENT APPLICATION

(11) **EP 2 563 028 A1**
(43) Date of publication of application: **27.02.2013**
(21) Application number: 11178505.1
(22) Date of filing: 23.08.2011
(51) Int. Cl.: H04N 21/231, G06F 9/50, H04L 29/08

(54) **Media procesing load sharing**

(71) Applicant: Alcatel Lucent, 75007 Paris (FR)
(72) Inventor: Osmond, Marin, 35000 RENNES (FR); Saada, Stéphane, 35000 RENNES (FR)
(74) Representative: Demulsant, Xavier

(57) **Abstract**

A method for processing a media content about which a request is made by a terminal (**11-14**) to a network element (**10**), said method comprising a negotiation phase of media processing load sharing between the network element (**10**) and the terminal (**11-14**) depending on the capabilities of the said terminal (**11-14**), said negotiation phase including
- an informing step of the network element (**10**) about the terminal (**11-14**) capabilities ;
- an offloading step to the terminal of at least a media processing task to perform on the media content depending on the terminal capabilities.

## Description

### FIELD OF THE INVENTION

The present invention pertains to content delivery to fixed and mobile user equipments connected to a communication network.

### BACKGROUND OF THE INVENTION

The rapid proliferation of communications network services has resulted in an increased heterogeneity in user equipments and connections used for information access. It has also led to a fast growth of network traffic load with diverse traffic characteristics and needs.

In particular, with the increasing availability and use of media content over communications networks (VoD, video game, audio/video communication, IPTV, social media), delivering customized data to plethora of heterogeneous client devices require steadily increasing media processing. Such processing is mainly centered on media content adaptation to special needs of each individual user, and respectively his/her device, such as
- content preferences: screen layout, resolution for exemple;
- transcoding constraints: codec conversion, resizing, bit rate and frame rate conversion, lip-sync, 3D rendering, background and foreground manipulation, dynamic addition of graphic overlay, multi-view video, video interactive services for example; and
- device capabilities: video optimization according to terminal capabilities.

Such media processing is generally performed in the network (media servers). The problem is that this media processing load is very demanding in resources, especially when, for example,
- each user connected to the system has his own media flow with highly customized display (no common media for several users) ;
- heavy processing is required (background extraction, 3D rendering for example).

Such surcharge may lead to quality degradation.

Obviously, increasing the network processing capabilities, by adding servers or new hardware processing capabilities (GPU, DSP for example) is not the best solution as it requires a significant cost, and therefore limits the economical interest or even endanger the viability of some applications and distort the economical model of such services.

An object of the present invention is to overcome the aforementioned problems, and offers other advantages over the prior art.

Another object of the present invention is to reinforce networks to handle user equipments heterogeneity and content processing load.

Another object of the present invention is to lighten the load on network equipments during media content delivery to user equipments.

### DESCRIPTION OF THE DRAWING

The objects, advantages and other features of the present invention will become more apparent from the following disclosure and claims. The following non-restrictive description of preferred embodiments is given for the purpose of exemplification only with reference to the accompanying drawings in which:
- figure 1 illustrates the deployment context of the present invention;
- figure 2 is a block diagram illustrating one embodiment of a negotiation between a user equipment and a network element for content processing load sharing;
- figure 3 is a block diagram illustrating a deployment of one embodiment;
- figures 4-5 are two block diagrams illustrating an implementation of one embodiment on both terminal and network sides.

### SUMMARY OF THE INVENTION

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key of critical elements of the invention or to delineate the scope of the invention. Its sole purpose is to present some concepts in a simplified form as a prelude to the more detailed description that is discussed later.

The present invention relates to a method for processing a media content about which a request is made by a terminal to a network element, said method comprising a negotiation phase of media processing load sharing between the network element and the terminal depending on the capabilities of the said terminal, said negotiation phase including
- an informing step of the network element about the terminal capabilities ;
- an offloading step to the terminal of at least a media processing task to perform on the media content depending on the terminal capabilities.

The present invention further relates to a network element for processing a media content about which a request is made by a terminal, comprising means for offloading to the said terminal at least a media processing task to perform on the media content depending on the capabilities of the said terminal.

The present invention further relates to a terminal comprising means configured to inform a network element about the capabilities of the said terminal to perform at least a media processing task on a media content about which it made a request to a network element.

The present invention further relates to a computer program product adapted to perform the method cited above.

Advantageously, the above method takes profit of terminals spare media processing capabilities.

Advantageously, the terminal operates in a dynamic way in the above method, meaning that the operations off-loaded to user equipment are not determined in advance.

While the invention is susceptible to various modification and alternative forms, specific embodiments thereof have been shown by way of example in the drawings. It should be understood, however, that the description herein of specific embodiments is not intended to limit the invention to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

### DETAILED DESCRIPTION OF ILLUSTRATIVE EMBODIMENTS

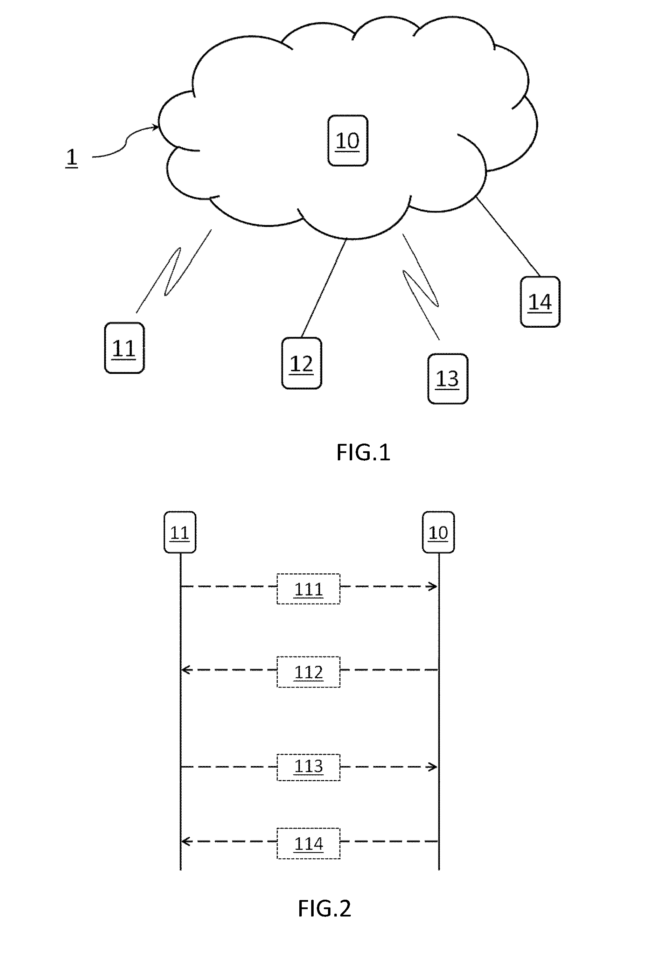

With reference to figure 1, there is shown a plurality of user equipments **11-14** (herein designated "terminals") connected to a communication network **1** comprising at least a network element **10** charged for providing media contents to terminals **11-14.** Obviously, the network **1** may be any combination of networks such as PSTN, mobile, IP, IPTV (Internet, local area network (LAN), a wide area network (WAN), Wifi, WiMAX, CDMA, or LTE for example).

The network element **10** may be a Multipoint Control Unit (MCU) and/or a media server, a multimedia content server, a Web server, or, more generally, any communication unit - acting alone or in group ― configured to deliver, in response to a request from a terminal **11-14,** a media content. By "media content" is meant broadly and not restrictively to include any multimedia content such as real-time/ not real-time audio/video content, photo/picture or more generally any data that may need at least a media processing such as transcoding, mixing, compression/decompression, recording, recognition, or 3D graphics handling.

As non-exhaustive examples of terminals **11-14,** one can mention cellular phones, Smartphones, Personal Digital Assistants (PDA), computers, laptops, or HDTV. In particular, theses terminals **11-14** are ever evolving and are built with more and more elaborated, even oversized, capabilities, typically, in terms of
- onboard memory in all its types (for example, Random Access Memory, Read-Only Memory, cache memory, storage memory);
- processor (Central Processing Unit) performance (operating frequency, number of cores: dual-core, multi-core, multithreading for example) ;
- hardware and/or software performances (electronic components, algorithms, operating systems) ;
- graphic performances (graphics processing unit, color depth, screen size, resolution); and
- network access (various interfaces, resources (ports, bandwidth) for example).

These capabilities are, generally, not fully utilized by processes running on the terminal **11-14** and are, therefore, available.

In one embodiment, when the terminal **11-14** invokes a media content from the network element **10,** a negotiation is established between them in order to enable a dynamic split of the media processing load between them, depending on the terminal **11-14** capabilities.

In function of terminal **11-14** capabilities and processing tasks to be performed, media processing load may be dynamically shared between the network element **10** and the terminal **11-14.** As a result and depending on terminal **11** capabilities, media processing tasks relative to a certain media content requested by terminal **11** may be
- partially executed by the network element **10,** remaining ones being executed by terminal **11** itself or by one or others terminal(s) **12-14** in interaction with terminal **11** (in the case of a call/video conference, an online video game for example);
- totally taken in charge by the network element **10;** or
- entirely taken in charge by the terminal **11** itself.

Dynamic sharing of media processing load between network element **10** and terminals **11-14** is made on the basis of a plurality of factors comprising
- media content relevant information (content profile) such as coding format (e.g. H.264), required storage on user equipment, and required protocol (H.323, H.324, SIP for example); and
- terminal capabilities including
   o terminal relevant technical information (terminal profile) such as current available memory space, central unit processing characteristics, operating system, supported audio and video codecs; and
   o user preferences (user profile) which may include all user specific information like presentation preferences (screen layout for example), preferred quality degrees regarding the different media components (delay, resolution for example), user controllable policies for application adoption (preferences regarding access network, resources controlled by the user for example).

Advantageously, terminals **11-14** capabilities are generally expressed in quantifiable metrics (instructions per second, battery level, available memory in bytes, software version, operating system release, user preferences in form of rules/policies for example), facilitating the dynamic split of media processing load between the network element **10** and the terminal **11.**

Referring now to figure 2, the sharing of media processing load between the network element **10** and the terminal **11** is achieved through an applicative-level negotiation (a communication protocol) comprising at least the following interactions:
- the terminal **11** sends to the network element **10** (step **111** in figure 2) a request about a media content, such as
   o display (streaming) a video content from a video sharing platform/social media-site, or display a video content of a participant in a one-toe-one video communication or more generally in a videoconference and insert the name thereof (resulting in an incoming flow to terminal **11) ;**
   o upload a media content for a given destination, or record a video of me, extract the background, insert a new one and post it on a website (resulting in a outcoming flow from the terminal **11);**
   o download a media content
- in function of the required processing for the requested media content, the network element **10** enquires (step **112** in figure 2) which tasks the terminal **10** is willing/able to handle. In other words, the network **1** enquires about the terminal **11** capabilities with respect to the tasks to be performed on the requested media content. To that end, the network element **10**
   o checks media content(s) relevant information, such as : available flow(s) (only terminal **11** own flow, a plurality of flows in the case of a video conference for example), transcoding parameters (coding format, rate reduction for example), requirements to handle such flow(s) (bandwidth, software, hardware for example) ;
   o specifies the tasks to be performed on checked media content(s): background extraction, new background insertion, date and time insertion on screen, transcoding to H.264 for example.
- the terminal **11** checks which task(s) it can perform, depending on its current capabilities, and informs the network element **10** thereabout (step **113** in figure 1). Namely, the terminal **11** notifies the network element **10** something in the form of: "I can take care of background extraction, and date and time insertion on screen";
- the network element **10**
   ○ acknowledges (step **114** in figure 1) the terminal **11** response, and
   ○ offload to terminal **11** the appropriate flow(s) and task(s) in the following illustrative way: "do the following task: background extraction. The network element **10** takes care of the remaining tasks: new background insertion, date and time insertion on screen, transcoding to H.264". Accordingly, some tasks are to be executed by the network element **10,** while the remaining ones are to be achieved by the target terminal **11.**

It is to be noted that the terminal **11** does not necessarily discharge all the tasks that it declares able to handle. Offloaded tasks to terminal **11** may be all, some, or any of tasks which it is able to perform. Advantageously, this favors coordination between terminals in the case of a session including a plurality of terminals (a video conference for example).

Media content processing load negotiation between the terminal **11** and the network element **10** may take place
- as soon as a communication session including the terminal **11** and the network element **10** is established; or
- during a communication session: negotiation can start (or restart) at step **111** or **112** following any change on the terminal (such as layout change, terminal battery exhaustion), or on the network link between the terminal **11** and the network element **10** (access network change, network resources change for example).

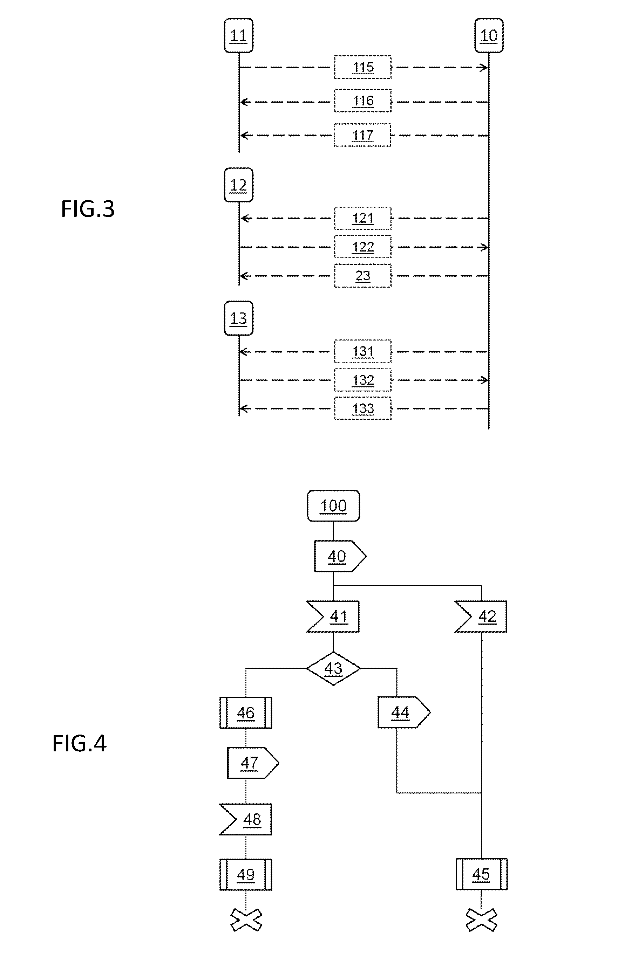

Figures 3-4 show two illustrative application scenarios of the above more general case.

Figure 3 illustrate a conference scenario wherein 4 end-users want to meet in video conference with contentious presence (tiled display, or mosaic), each one having its own personalized display (user profile):
- the network element **10** informs each one of the participant terminals **11-14** (steps **115, 121, 131** in figure 3) about current flows and tasks to be performed respectively for each requested flow. In fact, the network element **10** negotiates individually (steps **115, 121, 131** in figure 3) with each terminal **11-14** in order to spread the processing load over participant terminals - in function of their respective capabilities - and itself (i.e. the network element **10**). As exemple one can mention, its interaction with terminal **11** (step **115** in figure 3):
   o available flows: flow of terminal **11** (mandatory), individual or composed (optional) flows of terminals **12-14** ;
   o tasks to perform: Tilled Display Control (optional), insert participants name (optional), transcode flows of Terminals **11-14** or tiled to H.264 (optional).
- Terminal **11** requests the display of only terminals **12-13** flows, while the network element **10** controls the layout which will be executed by the terminal **11** (step **116** in figure 3). That is to say that the terminal **11** report to the network element **10** its capabilities and that it wants to receive the flow of terminal **12** and **13** with tiled display description. Namely, in this example, the terminal **11** expresses the following
   o "I can take care of composed flows of terminal **12** and **13,** transcode to H.264 its outgoing and incoming from terminal **12** and **13;**
   o In response, the network element **10** sends (step **117** in figure 3) the layout description in a Synchronized Multimedia Integration Language (SMIL) page which will be executed by terminal **11.** Among tasks that can performed by terminal **11,** one can mention: Tiled Display Control, and execution, participant name insertion, transcoding, Tiled to H.264.
- Terminal **12** (respectively, **14**) has no capabilities, then all processing has to be controlled and executed by the network element **10** (no media processing to be performed by the terminal **12**). In other words, the terminal **12** (respectively 14) apprises (step **122** in figure 3) the network element **10** about the following:
   o "I want to receive flows of terminals **11-14** in a composed flow (obviously, is the network element **10** who executes the composition for it), and I can take care of transcoding the composed flow to H.264" ;
   o Therefore, the network element is in charge of transcoding the flow of terminal **12** to H.264 and of sending to terminal **12** the composed flow with names (step **123** in figure 3).
- Terminal **13** is the most capable: it receives all individual flows and information. Layout is controlled by terminal **13** (for example, by the end-user), and executed by terminal **13.** Then, the following negotiation may take place:
   o Terminal **13** (step **132** in figure 3): "I want to receive flows of terminals **11-14** with their names (the name of each participant is inserted below his picture), I can take care of Tiled Display Control and execution, of transcoding to H.264 (outgoing and incoming flow of terminal **11-14)";**
   o The network element **10** (step **133** in figure 3): "do the following: Tiled Display control and execution, transcode to H.264 (outgoing flow of terminal **13,** and incoming flow of terminal **14),** and I (i.e. the network element **10)** take care of transcoding the flow of terminal **12** to H.264 and forward to you the already transcoded flow of terminal **11** by terminal **11** itself".
- At the end of the negotiation, the network element **10** instructs (step **117** in figure 3) terminal **11** that it (the network element) will take care of one media processing task instead of terminal **11,** since it is common to several terminal.

In another illustrative example, a conference scenario with layout sharing is considered. It is the same scenario as the above one, except that terminal **13** acts as a director or moderator: terminal **13** picture is not sent to others, and terminal **13** is in control of the video composition (flow included or not, plus layout) for all the participants. Then the following negotiation may take place:
- Terminal **11 :**
   o Request: "I want to receive flow of terminals **12-14** and tiled display description",
   o Capabilities: "I can take care of Tiled Display (flows of terminals **11-14),** and of transcoding to H.264 (outgoing terminal **11** flow and incoming flows from terminals **12-14)**

Then, the network element **10** response is in the following form: "execute Tiled Display and transcode to H.264 (outgoing T1), and I (the Network element **10)** take care of transcoding the flows of terminals **12** and **14** to H.264 and of transmitting the flow of terminal **11** and Tiled Display Description".
- Terminal **12** (respectively terminal **14):**
   o Request: "I want to receive: tiled Display (i.e. Network element makes the composition);
   o Capabilities: "I can take care of : transcode to H.264 (the One Tiled Display)

In response, the network element takes care of transcoding the flows of terminal **12** and **14** to H.264 and of transmitting Tiled display to terminal **12** and **14.**
- Terminal 13:
   o Request : "I want to receive flows of terminal **12** and **14,** I don't want to send any flow" ;
   o Capabilities: "I can take care of Tiled Display Control and execution, and transcoding to H.264 (incoming flows from terminals **11-12** and **14) ;**

The network response is "control and execute Tiled Display, and I (the Network element **10)** take care of transcoding the flows of terminal **12** and **14** to H.264 and of transmitting already transcoded flow of terminal **11** by itself"

Figure 4-5 are two illustrative diagrams showing an illustrative implementation of the negotiation sequence, on both terminal and network sides.

Being already connected (step **100** in figure 4), when the terminal **11** invokes media content via a service call (step **40** in figure 4), there is two possible suites:
- a legacy service answer (step **42** in figure 4), and therefore a legacy service (step **45** figure 4) ; or
- the network element **10** makes a task sharing offer to the terminal **11** (step **41** in figure 4). Then, its dynamic media processing capability is checked (test **43** in figure 4). In case of a positive check result (i.e. the existence of a dynamic media processing capability), a task sharing answer is built (step **46** in figure 4), and subsequently communicated (step **47** in figure 4) to the network element **10.** The network element **10** acknowledges the task sharing (step **48**) and consequently shares the service with the terminal **11** (step **49** in figure 4). If the terminal does not support dynamic media processing capability (test **43**), the terminal refuses (step **44)** task sharing, and hence benefits of legacy service (step **45**).

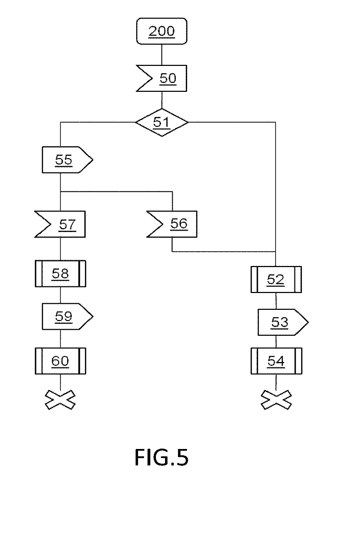

From the network element side, from an idle state (step **200** in figure 5), the network element **10** receives a service call (step **50** in figure 5) from a terminal. Once it receives a service call, the network element checks (test **51)** its dynamic media processing capability. In case of a positive check result, the network element sends (step **55**) a task sharing offer to the terminal from which it receives (step **57**) a sharing answer. Next, the network element computes (step **58**) task answers from all terminals and acknowledges (step **59**) task sharing and subsequently executes (step **60**) sharing service. Otherwise, (i.e. the network element does not support dynamic media processing capability), all tasks are done (step **52**) by the network element and assures (step **53**) legacy service answer, resulting in a legacy service (step **54**). It is to be noted that, when the network element receive (step **56**) a task sharing refusal, from a terminal, as response to its task sharing offer (step **55**), all tasks are done (step **52**) by the network element leading to a legacy service (step **54**).

In one embodiment, a receiving terminal requests media content from a media server by transmitting a content request and information about its own processing capabilities. The media server utilizes the terminal information and the required processing for the required media content in order to decide on offloading processing tasks to the receiving terminal.

It is to be noted that the communication exchange between the terminal and the network element is made by way of the network in a direct or indirect way (i.e. via a plurality of network nodes).

In one embodiment, tasks identification has to be common/standard between the network element **10** and terminals **11-14.** In fact, when the media processing task is not identified by the common/standard identification of tasks, it could be possible for the network element to directly send the code to execute on terminals.

In one embodiment, an analysis step precedes the processing load sharing negotiation: the network element sends to terminals some media processing code to execute (a predefined code), and would analyze the outcome of this execution to deduce terminal media processing capabilities and performances. This mechanism may also be used to trigger a new negotiation during the session.

The deployment of the above described method is assured thanks to means, implemented on both sides (i.e. on terminal **11** and on network element **10),** configured to assure the above described negotiation on media processing load between the network element and the terminal. In particular, such means include
- means, comprised within the network element, able to offload, to the terminal, at least a media processing task to perform on the media content according to the capabilities of the terminal ;
- means, comprised within the terminal **11,** able to inform the network element **10** about the capabilities of the said terminal **11** to perform at least a media processing task on the media content about which it made a request to the network element.

Advantageously, the above described method
- makes use of available user equipment capabilities to enhance network efficiency;
- customizes media data delivery to terminals according to their capabilities;
- reduces the computational complexity of transcoding without loss of quality in the final displayed content;
- balances load handling between the network and terminals;
- establishes a dynamic negotiation phase on media processing load sharing;
- proposes a terminal capabilities-aware network taking advantage of available capabilities on terminals.

While the invention has been described in terms of several embodiments and illustrative examples, those skilled in the art will recognize that the invention is not limited to the embodiments and examples described, but can be practiced with modification and alteration within the spirit and scope of the appended claims. The description is thus to be regarded as illustrative instead of limiting and the teachings of this disclosure may be applied to systems and methods which are similar but somewhat different than those which are discussed herein.

## Claims

1. A method for processing a media content about which a request is made by a terminal (**11-14**) to a network element (**10**), said method comprising a negotiation phase of media processing load sharing between the network element (**10**) and the terminal (**11-14**) depending on the capabilities of the said terminal (**11-14**), said negotiation phase including
- an informing step of the network element (**10**) about the terminal (**11-14**) capabilities ;
- an offloading step to the terminal of at least a media processing task to perform on the media content depending on the terminal capabilities.

2. The method of the preceding claim, wherein the terminal capabilities comprise user preferences.

3. The method of any of the preceding claims, further comprising a deduction step of the terminal (**11-14**) capabilities from its execution of a predefined code.

4. The method of any of the preceding claims, wherein the identification of media processing tasks to perform on the media content are common for the network element (**10**) and the terminal (**11-14**).

5. The method of any of the preceding claims, wherein the request about the media content is an upload request.

6. The method of any of the preceding claims from 1 to 4, wherein the request about the media content is a download request.

7. The method of any of the preceding claims from 1 to 4, wherein the request about the media content is a real-time video communication request.

8. The method of any of the preceding claims, wherein the media processing task comprises a transcoding task, a 3D rendering task, a background or foreground manipulation task, a graphic overlay task, a screen layout task, or a resizing task.

9. A network element for processing a media content about which a request is made by a terminal (**11-14**), comprising means for offloading, to the said terminal, at least a media processing task to perform on the said media content depending on the capabilities of the said terminal (**11-14**).

10. The network element of the preceding claim, wherein the network element (**10**) is a media server.

11. The network element of the claim 9, wherein the network element (10) is a multipoint control unit.

12. The network element of the claim 9, wherein the network element (10) is a multipoint control unit and a media server.

13. A terminal (**11-14**) comprising means configured to inform a network element (**10**) about the capabilities of the said terminal to perform at least a media processing task on a media content about which it made a request to a network element (**10**).

14. A computer program including instructions stored on a memory of a computer and/or a dedicated system, wherein said computer program is adapted to perform the method as claimed in preceding claims 1 to 8.

## Amended claims

### Amended claims in accordance with Rule 137(2) EPC.

**1.** A method for processing a media content about which a request is made by a terminal **(11-14)** to a network element **(10),** said method comprising a negotiation phase of media processing load sharing between the network element **(10)** and the terminal **(11-14)** depending on the capabilities of the said terminal **(11-14),** said negotiation phase including
- an informing step of the network element **(10)** about the terminal **(11-14)** capabilities and the user preferences;
- an offloading step to the terminal of at least a media processing task to perform on the media content depending on the terminal capabilities and the user preferences.

**2.** The method of claim 1, further comprising a deduction step of the terminal **(11-14)** capabilities from its execution of a predefined code.

**3.** The method of any of the preceding claims, wherein the identification of media processing tasks to perform on the media content are common for the network element **(10)** and the terminal **(11-14).**

**4.** The method of any of the preceding claims, wherein the request about the media content is an upload request.

**5.** The method of any of the preceding claims from 1 to 3, wherein the request about the media content is a download request.

**6.** The method of any of the preceding claims from 1 to 3, wherein the request about the media content is a real-time video communication request.

**7.** The method of any of the preceding claims, wherein the media processing task comprises a transcoding task, a 3D rendering task, a background or foreground manipulation task, a graphic overlay task, a screen layout task, or a resizing task.

**8.** A network element for processing a media content about which a request is made by a terminal **(11-14),** comprising means for offloading, to the said terminal, at least a media processing task to perform on the said media content depending on the capabilities of the said terminal **(11-14)** and the user preferences.

**9.** The network element of the preceding claim, wherein the network element **(10)** is a media server.

**10.** The network element of the claim 9, wherein the network element (10) is a multipoint control unit.

**11.** The network element of the claim 9, wherein the network element (10) is a multipoint control unit and a media server.

**12.** A terminal **(11-14)** comprising means configured to inform a network element **(10)** about the capabilities of the said terminal and the user preferences to perform at least a media processing task on a media content about which it made a request to a network element **(10).**

**13.** A computer program including instructions stored on a memory of a computer and/or a dedicated system, wherein said computer program is adapted to perform the method as claimed in preceding claims 1 to 7.
